# EUROPEAN PATENT APPLICATION

(11) **EP 3 467 751 A1**
(43) Date of publication of application: **10.04.2019**
(21) Application number: 16907783.1
(22) Date of filing: 05.07.2016
(51) Int. Cl.: G06Q 30/00

(54) **VEHICLE MANAGEMENT METHOD AND DEVICE**

(71) Applicant: Huawei Technologies Co., Ltd., Longgang Shenzhen, Guangdong 518129 (CN)
(72) Inventor: LIN, Yangbo, Shenzhen Guangdong 518129 (CN)
(74) Representative: Epping - Hermann - Fischer
(86) International application number: PCT/CN2016/088725
(87) International publication number: WO 2018/006278

(57) **Abstract**

The present invention discloses a vehicle management method and apparatus. The method includes: obtaining mode identifier information of a vehicle, where the mode identifier information indicates that the vehicle is in a rent mode or a self-use mode, the rent mode means that any user is allowed to independently use the vehicle, and the self-use mode means that only a self-use user is allowed to use the vehicle; and scheduling the vehicle according to the mode identifier information. According to the vehicle management method and apparatus in embodiments of the present invention, vehicle resources can be effectively managed.

## Description

### TECHNICAL FIELD

The present invention relates to the intellectual transportation field, and more specifically, to a vehicle management method and apparatus.

### BACKGROUND

An Intelligent Transportation System (Intelligent Transportation System, "ITS" for short) is intended to establish, by integrating and applying advanced technologies such as an information technology, a communications technology, a sense technology, a control technology, and a computer technology, a real-time, accurate, efficient, and comprehensive transportation management system that functions in a wide range and in all aspects. Automated driving (Automated Driving) plays an extremely important role in the ITS. By means of automated driving, disadvantages of human drivers in judgment, reaction, and operation can be effectively avoided, thereby improving transportation safety. By means of automated driving, information and resources that can be provided in a transportation system can be better used, thereby improving transportation efficiency.

Currently, in the ITS, humans are liberated from a role of vehicle drivers by using an automated driving technology, so that vehicles provide more convenient services for humans. However, in the automated driving technology, vehicles are not differentiated to use different scheduling rules. Consequently, vehicle resources in the ITS cannot be flexibly used in the automated driving technology.

### SUMMARY

The present invention provides a vehicle management method and apparatus, so as to effectively manage vehicle resources.

According to a first aspect, a vehicle management method is provided, including:
obtaining mode identifier information of a vehicle, where the mode identifier information indicates that the vehicle is in a rent mode or a self-use mode, the rent mode means that any user is allowed to independently use the vehicle, and the self-use mode means that only a self-use user is allowed to use the vehicle; and
scheduling the vehicle according to the mode identifier information.

According to the vehicle management method in this embodiment of the present invention, a management center obtains the mode identifier information of the vehicle, and schedules the vehicle according to the mode identifier information of the vehicle, so as to effectively manage vehicle resources.

In this embodiment of the present invention, the rent mode means that any user is allowed to independently use the vehicle, and the self-use mode means that only a self-use user is allowed to use the vehicle. The self-use user is a user allowed by an owner to use the vehicle (for example, a relative or a friend of the owner), and a rental user is another user, other than the self-use user, who uses the vehicle. Any user includes the self-use user and/or the rental user.

In this embodiment of the present invention, the mode identifier information of the vehicle may be determined by the management center or set by a user for the vehicle.

In some possible implementations, after the obtaining mode identifier information of a vehicle, the method further includes:
sending the mode identifier information to the vehicle, so that the vehicle uses the rent mode or the self-use mode.

The management center sends the mode identifier information to the vehicle, so that the vehicle is in the rent mode or the self-use mode.

In some possible implementations, the obtaining mode identifier information of a vehicle includes:
receiving the mode identifier information from the vehicle.

In this embodiment of the present invention, the mode identifier information of the vehicle that is received by the management device may be provided or sent by the vehicle.

Optionally, before the receiving the mode identifier information provided by the vehicle, the method may further include:
sending a query message to the vehicle, where the query message is used to obtain the mode identifier information.

In this embodiment of the present invention, the management device may actively query the mode identifier information of the vehicle.

In some possible implementations, the obtaining mode identifier information of a vehicle includes:
generating the mode identifier information according to vehicle use information in an Intelligent Transportation System ITS.

Herein, in addition to receiving the mode identifier information sent by the vehicle, the management device may generate or set the mode identifier information with reference to the vehicle use information by itself.

Optionally, the method further includes:
setting the mode identifier information for the vehicle.

Herein, the management center directly sets the mode identifier information for the vehicle. Alternatively, the management center sends the specified mode identifier information to the vehicle, so that the vehicle changes a mode of the vehicle according to the mode identifier information.

With reference to the first aspect, in a first possible implementation, the scheduling the vehicle according to the mode identifier information includes:
obtaining a use time plan of a user who is going to use the vehicle; and
when a use time plan of a user who is allowed to use the vehicle is not in conflict with the use time plan of the user who is going to use the vehicle, sending a first vehicle use notification message to the vehicle, where the first vehicle use notification message includes identity information of the user who is going to use the vehicle and the use time plan of the user who is going to use the vehicle, so as to instruct the vehicle to execute, in a time period indicated in the use time plan of the user who is going to use the vehicle, a control command that is for the vehicle and that is entered by the user who is going to use the vehicle, where
when the mode identifier information indicates that the vehicle is in the rent mode, the user who is going to use the vehicle represents any other user different from the user who is allowed to use the vehicle, and the user who is allowed to use the vehicle represents any user who is allowed to use the vehicle; or when the mode identifier information indicates that the vehicle is in the self-use mode, the user who is going to use the vehicle represents another self-use user different from the user who is allowed to use the vehicle, and the user who is allowed to use the vehicle represents a self-use user who is allowed to use the vehicle.

Therefore, when the vehicle is in the rent mode or the self-use mode, the management device may send the first vehicle use notification message to the vehicle, and schedule the vehicle to the user who is going to use the vehicle, so that the vehicle executes, in the time period indicated in the use time plan of the user who is going to use the vehicle, the control command that is for the vehicle and that is entered by the user who is going to use the vehicle. Herein, when the vehicle is in the rent mode, the user who is going to use the vehicle represents any other user different from the user who is allowed to use the vehicle, and the user who is allowed to use the vehicle represents any user who is allowed to use the vehicle; or when the vehicle is in the self-use mode, the user who is going to use the vehicle represents another self-use user different from the user who is allowed to use the vehicle, and the user who is allowed to use the vehicle represents a self-use user who is allowed to use the vehicle.

With reference to the first possible implementation of the first aspect, in a second possible implementation, before the obtaining a use time plan of a user who is going to use the vehicle, the method further includes:
obtaining the use time plan of the user who is allowed to use the vehicle; and
sending a second vehicle use notification message to the vehicle, where the second vehicle use notification message includes identity information of the user who is allowed to use the vehicle and the use time plan of the user who is allowed to use the vehicle.

Therefore, when the vehicle is in the rent mode or the self-use mode, the management device may first send the second vehicle use notification message to the vehicle, so that the vehicle learns the identity information of the user who is allowed to use the vehicle and the use time plan of the user who is allowed to use the vehicle.

In some possible implementations, the obtaining a use time plan of a user who is going to use the vehicle includes:
receiving a first vehicle use request message of the user who is going to use the vehicle, where the first vehicle use request message includes the identity information of the user who is going to use the vehicle and the use time plan of the user who is going to use the vehicle.

Herein, a driving route plan of the user who is going to use the vehicle that is obtained by the management device may be obtained by receiving the first vehicle use request message of the user who is going to use the vehicle.

In some possible implementations, the obtaining the use time plan of the user who is allowed to use the vehicle includes:
receiving a second vehicle use request message of the user who is allowed to use the vehicle, where the second vehicle use request message includes the identity information of the user who is allowed to use the vehicle and the use time plan of the user who is allowed to use the vehicle.

Similarly, a driving route plan of the user who is allowed to use the vehicle that is obtained by the management device may be obtained by receiving the second vehicle use request message of the user who is allowed to use the vehicle.

With reference to the first possible implementation or the second possible implementation of the first aspect, in a third possible implementation, after the sending a first vehicle use notification message to the vehicle, the method further includes:
obtaining an updated use time plan of the user who is allowed to use the vehicle; and
when the updated use time plan of the user who is allowed to use the vehicle is not in conflict with the use time plan of the user who is going to use the vehicle, sending a third vehicle use notification message to the vehicle, where the third vehicle use notification message includes the identity information of the user who is allowed to use the vehicle and the updated use time plan of the user who is allowed to use the vehicle; or
when the updated use time plan of the user who is allowed to use the vehicle is in conflict with the use time plan of the user who is going to use the vehicle, and the vehicle is used by the user who is going to use the vehicle, scheduling a new vehicle for the user who is allowed to use the vehicle; or
when it is determined that the updated use time plan of the user who is allowed to use the vehicle is in conflict with the use time plan of the user who is going to use the vehicle, and that the vehicle is not used by the user who is going to use the vehicle, scheduling a new vehicle for the user who is going to use the vehicle.

Therefore, when the vehicle is in the rent mode, after sending the first vehicle use notification message to the vehicle, the management device may further obtain the updated use time plan of the user who is allowed to use the vehicle, then determine whether the updated use time plan of the user who is allowed to use the vehicle is in conflict with the use time plan of the user who is going to use the vehicle, and determine, according to a conflict situation, whether to schedule the vehicle or a new vehicle for the user.

In some possible implementations, the obtaining an updated use time plan of the user who is allowed to use the vehicle includes:
receiving a third vehicle use request message of the user who is allowed to use the vehicle, where the third vehicle use request message includes the identity information of the user who is allowed to use the vehicle and the updated use time plan of the user who is allowed to use the vehicle.

Optionally, when determining that the updated use time plan of the user who is allowed to use the vehicle is in conflict with the use time plan of the user who is going to use the vehicle, the management device receives an alarm response message sent by the vehicle. The alarm response message is used to indicate that the updated use time plan of the user who is allowed to use the vehicle is in conflict with the use time plan of the user who is going to use the vehicle.

The management device schedules, according to the alarm response message, a new vehicle for the user who is allowed to use the vehicle or the user who is going to use the vehicle. This specifically includes: when the vehicle is used by the user who is going to use the vehicle, scheduling a new vehicle for the user who is allowed to use the vehicle; or when the vehicle is not used by the user who is going to use the vehicle, scheduling a new vehicle for the user who is going to use the vehicle.

Optionally, when the mode identifier information indicates that the vehicle is in the self-use mode, the method further includes:
sending a fourth vehicle use notification message to the vehicle, where the fourth vehicle use notification message includes identity information of a new user and a use time plan of the new user, and the new user is a user different from the self-use user; and
receiving a reject message sent by the vehicle, where the reject message is used to indicate that the vehicle rejects to perform an operation according to the fourth vehicle use notification message.

Optionally, when the mode identifier information indicates that the vehicle is in the self-use mode, the method further includes:
receiving a request message from another user different from the self-use user;
when it is determined that a requirement of the another user different from the self-use user does not match a vehicle in a rent mode, and it is determined that the requirement of the another user matches the vehicle in the self-use mode, sending a fifth vehicle use notification message to the vehicle, where the fifth vehicle use notification message includes identity information of the another user and a use time plan of the another user; and
after the management device receives a response message of the vehicle, determining to schedule the vehicle to the another user.

Therefore, when the vehicle is in the self-use mode, the management device may also receive a vehicle request of another user, and determine, by using a negotiation mechanism with the vehicle, whether to allow the another user to use the vehicle in the self-use mode.

Optionally, in some possible implementations, the management center determines, according to the mode identifier information, a vehicle resource set corresponding to the vehicle, and
schedules the vehicle according to the vehicle resource set corresponding to the vehicle.

Optionally, the determining, according to the mode identifier information, a vehicle resource set corresponding to the vehicle includes:
when the mode identifier information indicates that the vehicle is in the rent mode, determining that the vehicle resource set corresponding to the vehicle is a rent vehicle resource set.

Optionally, the determining, according to the mode identifier information, a vehicle resource set corresponding to the vehicle includes:
when the mode identifier information indicates that the vehicle is in the self-use mode, determining that the vehicle resource set corresponding to the vehicle is a self-use vehicle resource set.

Optionally, the vehicle is scheduled according to the vehicle resource set corresponding to the vehicle.

Therefore, in a specific implementation process, the management device may incorporate a vehicle into different vehicle resource sets according to mode identifier information of the vehicle, so as to schedule a corresponding vehicle according to the vehicle resource set subsequently.

According to a second aspect, a vehicle management method is provided, including:
receiving a vehicle scheduling message sent by a management device according to mode identifier information of a vehicle, where the mode identifier information indicates that the vehicle is in a rent mode or a self-use mode, the rent mode means that any user is allowed to independently use the vehicle, and the self-use mode means that only a self-use user is allowed to use the vehicle; and
performing use control according to the vehicle scheduling message.

According to the vehicle management method in this embodiment of the present invention, the vehicle receives the vehicle scheduling message sent by the management device according to the mode identifier information, and performs use control according to the vehicle scheduling message, so that the management device can effectively manage vehicle resources.

For example, the performing use control according to the vehicle scheduling message includes:
executing, by the vehicle in a time period indicated in a use plan of a user, a control command that is for the vehicle and that is entered by the user. The user may be a user who is going to use the vehicle, or may be a self-use user.

In some possible implementations, the method further includes:
obtaining the mode identifier information of the vehicle, and using the rent mode or the self-use mode according to the mode identifier information.

In some possible implementations, the obtaining the mode identifier information of the vehicle includes:
receiving the mode identifier information set by a user, where the user includes an owner of the vehicle, a user who has a management permission for the vehicle, or a user who is allowed to change the mode identifier information of the vehicle.

The owner has highest permission for the vehicle, the user who has a management permission for the vehicle is a specified permission possessor set by the owner, and the owner and the user who has a management permission for the vehicle may set the user who is allowed to change the mode identifier information of the vehicle.

Therefore, in the present invention, the mode identifier information received may also be set by the user. Likewise, the mode identifier information set by the user may also be provided to the management device.

In some possible implementations, the receiving a vehicle scheduling message sent by a management device according to mode identifier information of a vehicle includes:
receiving a first vehicle use notification message sent by the management device, where the first vehicle use notification message includes identity information of a user who is going to use the vehicle and a use time plan of the user who is going to use the vehicle, and a use time plan of a user who is allowed to use the vehicle is not in conflict with the use time plan of the user who is going to use the vehicle, where
when the mode identifier information indicates that the vehicle is in the rent mode, the user who is going to use the vehicle represents any other user different from the user who is allowed to use the vehicle, and the user who is allowed to use the vehicle represents any user who is allowed to use the vehicle; or when the mode identifier information indicates that the vehicle is in the self-use mode, the user who is going to use the vehicle represents another self-use user different from the user who is allowed to use the vehicle, and the user who is allowed to use the vehicle represents a self-use user who is allowed to use the vehicle.

The vehicle receives the first vehicle use notification message sent by the management device, where the first vehicle use notification message includes the identity information of the user who is going to use the vehicle and the use time plan of the user who is going to use the vehicle, and the use time plan of the user who is going to use the vehicle is not in conflict with the use time plan of the user who is going to use the vehicle. Herein, when the vehicle is in the rent mode, the user who is going to use the vehicle represents any other user different from the user who is allowed to use the vehicle, and the user who is allowed to use the vehicle represents any user who is allowed to use the vehicle; or when the vehicle is in the self-use mode, the user who is going to use the vehicle represents another self-use user different from the user who is allowed to use the vehicle, and the user who is allowed to use the vehicle represents a self-use user who is allowed to use the vehicle.

Optionally, before the receiving a first vehicle use notification message sent by the management device, the method further includes:
receiving a second vehicle use notification message sent by the management device, where the second vehicle use notification message includes identity information of the user who is allowed to use the vehicle and an updated use time plan of the user who is allowed to use the vehicle.

Therefore, the vehicle may pre-receive the second vehicle use notification message, where the second vehicle use notification message includes the identity information of the user who is allowed to use the vehicle and the use time plan of the user who is allowed to use the vehicle, and the use time plan of the user who is allowed to use the vehicle is not in conflict with the use time plan of the user who is going to use the vehicle, so that the vehicle can further learn related information of the user who is allowed to use the vehicle. Related information of the user who is going to use the vehicle has been obtained by using the first vehicle use notification message.

Optionally, after the receiving a first vehicle use notification message sent by the management device, the method further includes:
receiving a third vehicle use notification message sent by the management device, where the third vehicle use notification message includes the identity information of the user who is allowed to use the vehicle and the updated use time plan of the user who is allowed to use the vehicle, and the updated use time plan of the user who is allowed to use the vehicle is not in conflict with the use time plan of the user who is going to use the vehicle, or the updated use time plan of the user who is allowed to use the vehicle is in conflict with the use time plan of the user who is going to use the vehicle, but the vehicle is not used by the user who is going to use the vehicle.

Optionally, when it is determined that the updated use time plan of the user who is allowed to use the vehicle is in conflict with the use time plan of the user who is going to use the vehicle, an alarm response message is sent to the management device. The alarm response message is used to indicate that the updated use time plan of the user who is allowed to use the vehicle is in conflict with the use time plan of the user who is going to use the vehicle.

Therefore, when determining that the updated use time plan of the user who is allowed to use the vehicle is in conflict with the use time plan of the user who is going to use the vehicle, the vehicle sends the alarm response message to the management device, so that the management device selects, according to the alarm response message, a corresponding vehicle for the user for scheduling.

In some possible implementations, when the mode identifier information of the vehicle indicates that the vehicle is in the self-use mode, the method further includes:
receiving a fourth vehicle use notification message sent by the management device, where the fourth vehicle use notification message includes identity information of a new user and a use time plan of the new user, and the new user is a user different from the self-use user; and
sending a reject message to the management device, where the reject message is used to indicate that the vehicle rejects to perform an operation according to the fourth vehicle use notification message.

Therefore, when the vehicle is in the self-use mode, in a period during which the vehicle is used by the self-use user, after receiving related information of the new user, for example, the fourth vehicle use notification message, the vehicle may send the reject message to the management device, indicating that the vehicle rejects to perform an operation according to the fourth vehicle use notification message.

Optionally, in some possible implementations, when the vehicle is in the self-use mode, the method further includes:
receiving a fifth vehicle use notification message sent by the management device, where the fifth vehicle use notification message includes identity information of another user and a use time plan of the another user, a requirement of the another user matches the vehicle, and the another user represents another user different from the self-use user; and
when it is determined to allow the another user to use the vehicle, sending a response message to the management center.

In a period during which the vehicle is in the self-use mode, the another user sends a vehicle use request to the management center. If the management center does not find an appropriate vehicle in a rent mode, the management center sends the fifth vehicle use notification message to the vehicle in the self-use mode. The vehicle matches the requirement of the another user. If the vehicle allows the another user to use the vehicle, the vehicle sends the response message to the management center.

In some possible implementations, the method further includes:
receiving new mode identifier information from the management device;
updating the current mode identifier information by using the new mode identifier message; and
receiving the mode identifier information set by the management device, where the mode identifier information is generated or set by the management device according to vehicle use information in an Intelligent Transportation System ITS.

Therefore, the vehicle receives the new mode identifier information determined by the management center, and changes the mode of the vehicle. The mode identifier information is determined by the management center according to the vehicle use information in the Intelligent Transportation System ITS or a transportation service scheduling requirement.

Optionally, in some possible implementations, the method further includes:
sending the mode identifier information to the management device.

After obtaining the mode identifier information of the vehicle, the vehicle may provide or send the mode identifier information to the management device, so that the management device generates a vehicle scheduling message according to the mode identifier information.

Optionally, before the sending the mode identifier information of the vehicle to the management device, the method further includes:
receiving a query message sent by the management device, where the query message is used by the management device to obtain the mode identifier information.

According to a third aspect, a vehicle management apparatus is provided, configured to execute the method in the first aspect or any possible implementation of the first aspect. Specifically, the apparatus includes a unit configured to execute the method in the first aspect or any possible implementation of the first aspect.

According to a fourth aspect, a vehicle is provided, configured to execute the method in the second aspect or any possible implementation of the second aspect. Specifically, the apparatus includes a unit configured to execute the method in the second aspect or any possible implementation of the second aspect.

According to a fifth aspect, a vehicle management apparatus is provided. The apparatus includes a processor, a memory, and a communications interface. The processor is connected to the memory and the communications interface. The memory is configured to store an instruction, the processor is configured to execute the instruction, and the communications interface is configured to communicate with another network element under control of the processor. When the processor executes the instruction stored in the memory, the processor executes the method in the first aspect or any possible implementation of the first aspect.

According to a sixth aspect, a computer readable medium is provided, configured to store a computer program, where the computer program includes an instruction used to execute the method in the first aspect or any possible implementation of the first aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario of an embodiment of the present invention;
FIG. 2 is a schematic flowchart of a vehicle management method according to an embodiment of the present invention;
FIG. 3 is a schematic flowchart of a vehicle management method according to another embodiment of the present invention;
FIG. 4 is a schematic diagram of an interaction example of a vehicle management method according to an embodiment of the present invention;
FIG. 5 is a schematic block diagram of a vehicle management apparatus according to an embodiment of the present invention;
FIG. 6 is a schematic block diagram of a vehicle according to an embodiment of the present invention;
FIG. 7 is a structural diagram of a vehicle management apparatus according to another embodiment of the present invention; and
FIG. 8 is a structural diagram of a vehicle apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

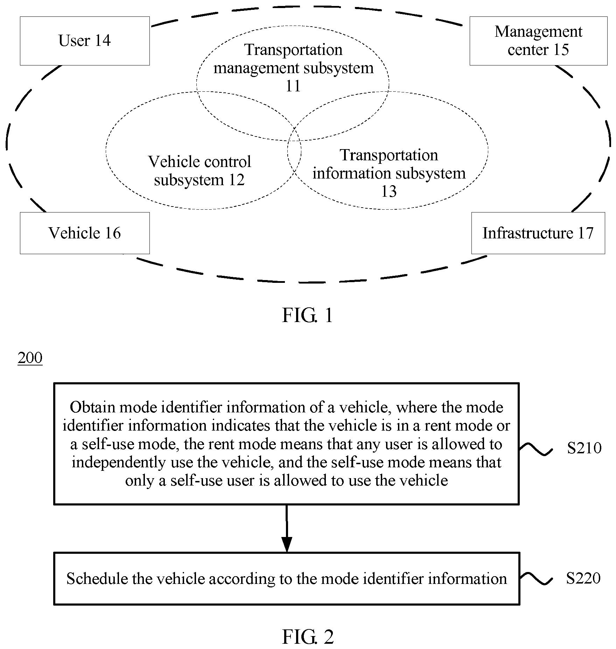

The technical solutions of the present invention may be applied to scenarios such as an Intelligent Transportation System (ITS) or an ITS based on an Internet of Things (Internet of Things, "IoT" for short) technology. The Intelligent Transportation System effectively and comprehensively applies an advanced information technology, data communications technology, sensor technology, electronic control technology, and computer technology to an entire transportation management system, so as to establish a comprehensive transportation and management system that functions in a wide range and in all aspects, such as an intelligent urban transportation scheduling system, an automated motor vehicle control system, a station passenger flow guidance system, and an intelligent expressway scheduling system. FIG. 1 shows a schematic diagram of an application scenario of an Intelligent Transportation System according to an embodiment of the present invention. It should be noted that, the example in FIG. 1 is intended to help a person skilled in the art better understand this embodiment of the present invention, instead of limiting the scope of this embodiment of the present invention.

As shown in FIG. 1, the Intelligent Transportation System may include a transportation management subsystem 11, a vehicle control subsystem 12, a transportation information subsystem 13, and the like. Main transportation participants in the system include a user 14, a management center 15, a vehicle 16, an infrastructure 17, and the like. The transportation management subsystem 11 is responsible for coordinating and controlling behavior of the transportation participants (including the user 14, the management center 15, the vehicle 16, and the infrastructure 17), the vehicle control subsystem 12 is responsible for safely and effectively controlling travelling of the vehicle 16, and the transportation information subsystem 13 is responsible for accurately collecting, processing, and exchanging information about the transportation participants (including the user 14, the management center 15, the vehicle 16, and the infrastructure 17) in a timely manner. Both the user 14 and the vehicle 16 make a general reference. The user 14 may include multiple users, and the vehicle 16 may include multiple vehicles.

The user in this embodiment of the present invention may be an owner of a vehicle, a permission possessor specified by the owner, or a user who is allowed by the owner to use the vehicle. Generally, identity authentication information of the owner has been set when the vehicle is sold or delivered. The owner has highest permission, and the owner may set more users who are allowed by the owner to use the vehicle. The vehicle also stores identity authentication information of a user who is allowed by the owner, and sends the stored identity authentication information of the owner and the user who is allowed by the owner to use the vehicle to the management center.

It should be understood that the identity authentication information of the user may include a user password (for example, a password entered by means of key pressing, by means of touch, by using a gesture, or the like is used for identifying), an identity card and certificate (for example, an ID card, a SIM card, a key card, or the like is used for identifying), a biological characteristic (for example, a fingerprint, a face, an iris, or the like is used for identifying), or the like. This is not limited.

In this embodiment of the present invention, the user and the vehicle have a relatively flexible interaction manner. For example, identity authentication information may be entered through a human-computer interaction interface, so as to perform an interaction action with the vehicle.

FIG. 2 shows a schematic flowchart of a vehicle management method 200 according to an embodiment of the present invention. The method is executed by the management center 15 in FIG. 1. For example, the management center may be a management device or a control center. The management device is used as an example for description in the following. The method 200 includes the following steps.

S210. Obtain mode identifier information of a vehicle, where the mode identifier information indicates that the vehicle is in a rent mode or a self-use mode, the rent mode means that any user is allowed to independently use the vehicle, and the self-use mode means that only a self-use user is allowed to use the vehicle.

S220. Schedule the vehicle according to the mode identifier information.

In this embodiment of the present invention, the management center obtains the mode identifier information of the vehicle, where the mode identifier information indicates that the vehicle is in the rent mode or the self-use mode; and then schedules the vehicle according to the mode identifier information. The vehicle is scheduled or the vehicle is scheduled to provide a transportation service, so that vehicle resources can be effectively managed.

The rent mode means that any user is allowed to independently use the vehicle, and the self-use mode means that only a self-use user is allowed to use the vehicle. The any user includes the self-use user and/or a rental user. The self-use user is a user allowed by an owner to use the vehicle (for example, a relative or a friend of the owner), and the rental user is another user, other than the self-use user, who uses the vehicle.

In this embodiment of the present invention, the mode identifier information may be received by the management center from the vehicle, or may be determined by the management center according to a transportation service requirement or vehicle use information in an Intelligent Transportation System ITS. Regardless of a manner in which the mode identifier information is obtained, the management center can implement scheduling or management for a vehicle in the ITS according to the mode identifier information.

The mode identifier information may be a mode identifier set by a user or the management center for the vehicle, and is used to indicate that the vehicle is in the rent mode or the self-use mode, or is used to indicate whether the vehicle can be rent. The mode identifier information may be implemented by using a flag bit, a data type of the mode identifier information may be an enumerated type, and values may be respectively corresponding to the rent mode and the self-use mode. Alternatively, a data type of the mode identifier information may be an integer type, and values include 0 and 1, which may be respectively corresponding to the rent mode and the self-use mode. Optionally, the mode identifier information further includes a validity period of a mode, such as a validity period of the self-use mode or a validity period of the rent mode.

It should be understood that a value of a flag bit corresponding to the mode identifier information may be set according to a requirement, and there is no limitation that the rent mode or the self-use mode needs to be corresponding to a specific value.

It should be noted that in this embodiment of the present invention, the mode identifier information (including a mode identifier value corresponding to the mode identifier information and a meaning of a value of the mode identifier information) is collectively defined in the ITS, and is understood by all participants in the ITS.

Therefore, according to the vehicle management method in this embodiment of the present invention, the management center schedules the vehicle according to the mode identifier information of the vehicle, so as to effectively manage vehicle resources.

Optionally, in an embodiment, S210 includes:
receiving the mode identifier information from the vehicle.

Specifically, the management center may receive the mode identifier information provided or sent by the vehicle, and then use the mode identifier information as a reference for managing a related activity and transaction. Herein, the mode identifier information sent by the vehicle is the mode identifier information set by the user on the vehicle. That is, the management center may schedule, according to the mode identifier information sent by the vehicle, the vehicle to provide a transportation service.

Optionally, before the receiving the mode identifier information from the vehicle, the method may further include:
sending a query message to the vehicle, where the query message is used to obtain the mode identifier information.

That is, the management center may send a query request message to the vehicle, to actively query the mode identifier information of the vehicle.

Optionally, the scheduling the vehicle according to the mode identifier information includes:
obtaining a use time plan of a user who is going to use the vehicle; and
when a use time plan of a user who is allowed to use the vehicle is not in conflict with the use time plan of the user who is going to use the vehicle, sending a first vehicle use notification message to the vehicle, where the first vehicle use notification message includes identity information of the user who is going to use the vehicle and the use time plan of the user who is going to use the vehicle.

When the mode identifier information indicates that the vehicle is in the rent mode, the user who is going to use the vehicle represents any other user different from the user who is allowed to use the vehicle, and the user who is allowed to use the vehicle represents any user who is allowed to use the vehicle; or when the mode identifier information indicates that the vehicle is in the self-use mode, the user who is going to use the vehicle represents another self-use user different from the user who is allowed to use the vehicle, and the user who is allowed to use the vehicle represents a self-use user who is allowed to use the vehicle.

The following describes in detail cases in which the vehicle is in the rent mode and the self-use mode.

Optionally, in an embodiment, the scheduling the vehicle according to the mode identifier information includes:
when the mode identifier information indicates that the vehicle is in the rent mode, obtaining the use time plan of the user who is going to use the vehicle, where the user who is going to use the vehicle represents any other user different from the user who is allowed to use the vehicle, and the user who is allowed to use the vehicle represents any user who is allowed to use the vehicle; and
when the use time plan of the user who is allowed to use the vehicle is not in conflict with the use time plan of the user who is going to use the vehicle, sending the first vehicle use notification message to the vehicle, where the first vehicle use notification message includes the identity information of the user who is going to use the vehicle and the use time plan of the user who is going to use the vehicle, so as to instruct the vehicle to execute, in a time period indicated in the use time plan of the user who is going to use the vehicle, a control command that is for the vehicle and that is entered by the user who is going to use the vehicle.

Specifically, if the mode identifier information indicates that the vehicle is in the rent mode, the management center determines that when the vehicle is in a time period during which the vehicle is not used by the user who is allowed to use the vehicle, that is, when the use time plan of the user who is allowed to use the vehicle is not in conflict with the use time plan of the user who is going to use the vehicle, the vehicle can be scheduled to the user who is going to use the vehicle. The user who is allowed to use the vehicle represents a user who is allowed to use the vehicle (for example, the owner, a user who has a vehicle management permission, or a user who is allowed by the owner or the user who has a vehicle management permission to use the vehicle), and the user who is going to use the vehicle represents another user different from the user who is allowed to use the vehicle. That is, the management center obtains the use time plan of the user who is going to use the vehicle, and when determining that the use time plan of the user who is going to use the vehicle is not in conflict with the use time plan of the user who is allowed to use the vehicle, the management center determines to schedule, according to the use time plan of the user who is going to use the vehicle, the vehicle to the user who is going to use the vehicle, and sends the first vehicle use notification message to the vehicle. The first vehicle use notification message includes the identity information of the user who is going to use the vehicle and the use time plan of the user who is going to use the vehicle. The management device sends the first vehicle use notification message to the vehicle, to instruct the vehicle to execute, in the time period indicated in the use time plan of the user who is going to use the vehicle, the control command that is for the vehicle and that is entered by the user who is going to use the vehicle, so as to complete a vehicle use plan of the user who is going to use the vehicle.

When the vehicle is in the rent mode, the user who is going to use the vehicle and the user who is allowed to use the vehicle are different users.

Herein, the expression "not in conflict" means that a time period in which the vehicle is to be used by the user who is allowed to use the vehicle is not in conflict with a time period in which the vehicle is to be used by the user who is going to use the vehicle, that is, the use time plans are not in conflict in terms of time. Alternatively, it may be understood as: Time periods corresponding to the use time plan of the user who is allowed to use the vehicle and the use time plan of the user who is going to use the vehicle have no intersection.

Herein, if the use time plan of the user who is allowed to use the vehicle that is obtained by the management center is in conflict with the use time plan of the user who is going to use the vehicle, that is, if the user who is allowed to use the vehicle has set the vehicle to the rent mode, but the user who is allowed to use the vehicle still needs to use the vehicle, the use time plan of the user who is allowed to use the vehicle is in conflict with the use time plan of the user who is going to use the vehicle. In this case, the user who is allowed to use the vehicle continues to use the vehicle, and after finishing using the vehicle, may rent the vehicle to the user who is going to use the vehicle.

Optionally, before the obtaining a use time plan of a user who is going to use the vehicle, the method further includes:
obtaining the use time plan of the user who is allowed to use the vehicle; and
sending a second vehicle use notification message to the vehicle, where the second vehicle use notification message includes identity information of the user who is allowed to use the vehicle and the use time plan of the user who is allowed to use the vehicle.

Specifically, before obtaining a driving plan of the user who is going to use the vehicle, the management center may pre-obtain the use time plan of the user who is allowed to use the vehicle, schedule, according to the use time plan of the user who is allowed to use the vehicle, the vehicle to the user who is allowed to use the vehicle, and send the second vehicle use notification message to the vehicle. The second vehicle use notification message includes the identity information of the user who is allowed to use the vehicle and the use time plan of the user who is allowed to use the vehicle, so that the vehicle can confirm the identity information of the user who is allowed to use the vehicle, and provide a transportation service according to the use time plan of the user who is allowed to use the vehicle. Optionally, if the user who is allowed to use the vehicle does not use the vehicle temporarily, the user who is allowed to use the vehicle may set a use mode of the vehicle to the rent mode (including a validity period of the rent mode). In this case, if there is another user (for example, a user who is going to use the vehicle) that initiates a vehicle rent request message to the management center, the management center schedules the vehicle to the user who is going to use the vehicle. Herein, before the vehicle is scheduled to the user who is going to use the vehicle or before a driving plan of the user who is going to use the vehicle is obtained, even if the mode identifier information of the vehicle identifies the rent mode, the vehicle may be used temporarily only by the user who is allowed to use the vehicle. This is not limited.

Optionally, the obtaining a use time plan of a user who is going to use the vehicle includes:
receiving a first vehicle use request message of the user who is going to use the vehicle, where the first vehicle use request message includes the identity information of the user who is going to use the vehicle and the use time plan of the user who is going to use the vehicle.

Specifically, the management center may receive the first vehicle use request message of the user who is going to use the vehicle, and the first vehicle use request message includes the identity information and the use time plan of the user who is going to use the vehicle. Optionally, the use time plan is rent duration information of the user who is going to use the vehicle. When determining to schedule the vehicle to the user who is going to use the vehicle to rent, the management center sends the first vehicle use notification message to the vehicle. The first vehicle use notification message includes the identity information of the user who is going to use the vehicle and the use time plan of the user who is going to use the vehicle, so that the vehicle verifies, according to the first vehicle use notification message, the identity information of the user who is going to use the vehicle, and the user who is going to use the vehicle can use the vehicle. That is, when determining to schedule the vehicle to the user who is going to use the vehicle, the management center may send a notification message to the vehicle. The notification message is used to instruct the vehicle to make related preparations, and the notification message may also include identity information and rent duration information of a user who is allowed to use the vehicle by means of renting, and/or a getting on/off plan. For example, the user is the user who is going to use the vehicle. The identity information may be identity authentication information or permission information of the user who is going to use the vehicle, the rent duration information is information about a time of renting the vehicle by the user who is going to use the vehicle, and the getting on/off plan is information about a time of getting on/off by the user who is going to use the vehicle or about a specific location. Similarly, a vehicle use notification message and a vehicle use request message of a user who is allowed to use the vehicle have similar functions for the vehicle, so that identity information of the user who is allowed to use the vehicle is verified in a proper situation, or driving is performed according to a use time plan of the user who is allowed to use the vehicle.

Optionally, the obtaining the use time plan of the user who is allowed to use the vehicle includes:
receiving a second vehicle use request message of the user who is allowed to use the vehicle, where the second vehicle use request message includes the identity information of the user who is allowed to use the vehicle and the use time plan of the user who is allowed to use the vehicle.

In this embodiment of the present invention, a use time plan of a user may include rent duration information of the user, that is, information about a time of using or renting the vehicle by the user.

The second vehicle use request message has similar usage as the first vehicle use request message. For brevity, details are not described.

It should be understood that in this embodiment of the present invention, a time and a way of receiving or sending identity information and a use time plan (for example, rent duration information) of a user are not limited, and the identity information and the use time plan may be received or sent at a same time or different time, or may be carried in another proper message. This is not limited.

Optionally, in an actual data implementation process, for example, that the management center may determine, according to the mode identifier information, a vehicle resource set corresponding to the vehicle includes:
when the mode identifier information indicates that the vehicle is in the rent mode, determining that the vehicle resource set corresponding to the vehicle is a rent vehicle resource set.

Optionally, the management center schedules the vehicle according to the vehicle resource set corresponding to the vehicle.

Specifically, when the mode identifier information indicates that the vehicle is in the rent mode, the management center incorporates the vehicle into the rent vehicle resource set. In a period during which the vehicle can be rented, the management center receives a request message from a user who is going to use the vehicle, where the user who is going to use the vehicle is another user different from a user who is allowed to use the vehicle, then performs matching between a requirement of the user who is going to use the vehicle and each vehicle in the rent vehicle resource set. When determining that the vehicle matches the requirement of the user who is going to use the vehicle, the management center determines to schedule the vehicle, so that the vehicle can be rented by the user who is going to use the vehicle.

For example, current mode identifier information of the vehicle is set to the rent mode by an owner or a user A who has vehicle permission, and after receiving the mode identifier information of the vehicle, the management center adds the vehicle to the rent vehicle resource set. In this case, if a user B sends, to the management center, a request for applying for vehicle use together with identity information and rent duration of B, and after receiving the vehicle use request from B, the management center finds, in the rent vehicle resource set, a vehicle matching a requirement of B, the management center determines to schedule the vehicle for B to rent.

It should be understood that in this embodiment of the present invention, both a quantity of vehicles and a quantity of users in the ITS are not limited. A user who is allowed to use the vehicle and a user who is going to use the vehicle are merely used as an example for description herein, and flexible processing may be performed according to a situation in practice.

It should further be understood that numbers "first", "second", ... in this embodiment of the present invention are merely used for differentiating different objects, for example, for differentiating different users, and are not intended to limit the scope of this embodiment of the present invention, and the present invention is not limited thereto.

Therefore, according to the vehicle management method in this embodiment of the present invention, the management center schedules the vehicle according to the mode identifier information of the vehicle, so as to effectively manage vehicle resources.

Optionally, after the sending a first vehicle use notification message to the vehicle, the method further includes:
obtaining an updated use time plan of the user who is allowed to use the vehicle; and
when the updated use time plan of the user who is allowed to use the vehicle is not in conflict with the use time plan of the user who is going to use the vehicle, sending a third vehicle use notification message to the vehicle, where the third vehicle use notification message includes the identity information of the user who is allowed to use the vehicle and the updated use time plan of the user who is allowed to use the vehicle; or
when the updated use time plan of the user who is allowed to use the vehicle is in conflict with the use time plan of the user who is going to use the vehicle, and the vehicle is used by the user who is going to use the vehicle, scheduling a new vehicle for the user who is allowed to use the vehicle; or
when it is determined that the updated use time plan of the user who is allowed to use the vehicle is in conflict with the use time plan of the user who is going to use the vehicle, and that the vehicle is not used by the user who is going to use the vehicle, scheduling a new vehicle for the user who is going to use the vehicle.

Specifically, when the vehicle is in the rent mode, after the use time plan of the user who is going to use the vehicle is obtained, if the user who is allowed to use the vehicle sends the updated use time plan to the management center, when determining that the updated use time plan of the user who is allowed to use the vehicle is not in conflict with the use time plan of the user who is going to use the vehicle, the management center determines to schedule, according to the updated use time plan of the user who is allowed to use the vehicle, the vehicle to the user who is allowed to use the vehicle. That is, if the user who is going to use the vehicle does not need to use the vehicle, the management center may directly schedule the vehicle to the user who is allowed to use the vehicle, and sends the third vehicle use notification message to the vehicle. The third vehicle use notification message includes the identity information of the user who is allowed to use the vehicle and the updated use time plan of the user who is allowed to use the vehicle. Alternatively, when the management center determines that the updated use time plan of the user who is allowed to use the vehicle is in conflict with the use time plan of the user who is going to use the vehicle, in a first case, if the vehicle is used by the user who is going to use the vehicle, from a proper perspective, the management center cannot forcibly schedule the vehicle to the user who is allowed to use the vehicle, and the management center needs to re-schedule, for the user who is allowed to use the vehicle, another vehicle to the user who is allowed to use the vehicle; or in a second case, if the vehicle is not used by the user who is going to use the vehicle, the management center schedules the vehicle to the user who is allowed to use the vehicle, and re-schedules, for the user who is going to use the vehicle, another vehicle to the user who is going to use the vehicle.

In this embodiment of the present invention, the updated use time plan of the user who is allowed to use the vehicle means that when the vehicle is in the rent mode, if the user who is allowed to use the vehicle needs to use the vehicle again, the user who is allowed to use the vehicle sends a vehicle use request message to the management center according to the updated use time plan.

Optionally, the obtaining an updated use time plan of the user who is allowed to use the vehicle includes:
receiving a third vehicle use request message of the user who is allowed to use the vehicle, where the third vehicle use request message includes the identity information of the user who is allowed to use the vehicle and the updated use time plan of the user who is allowed to use the vehicle.

When the vehicle is in the rent mode, the user who is allowed to use the vehicle sends the third vehicle use request message to the management center. The third vehicle use request message includes the identity information of the user who is allowed to use the vehicle and the updated use time plan of the user who is allowed to use the vehicle. The management center sends the third vehicle use notification message to the vehicle, where the third vehicle use notification message includes the identity information of the user who is allowed to use the vehicle and the updated use time plan of the user who is allowed to use the vehicle.

Optionally, after it is determined that rent duration of the user who is going to use the vehicle ends, a vehicle mode switch message is sent to the vehicle. The mode switch message is used to instruct the vehicle to switch to the self-use mode.

After it is determined that the vehicle switches to the self-use mode, the vehicle is scheduled to the user who is allowed to use the vehicle.

For example, in a period during which the vehicle is rent, the vehicle is rented to be used by a user who is going to use the vehicle. If a user who is allowed to use the vehicle needs to use the vehicle, the user who is allowed to use the vehicle may send a request message to the management center. The user who is allowed to use the vehicle may be an owner or another user who is set to be allowed by the owner to use the vehicle. The management center receives the request message of the user who is allowed to use the vehicle, and after determining that rent duration of the user who is going to use the vehicle ends, the management center sends a mode switch message to the vehicle, so as to instruct the vehicle to switch the rent mode to the self-use mode, so that the user who is allowed to use the vehicle can use the vehicle. After it is determined that the vehicle switches to the self-use mode, the vehicle is scheduled to the user who is allowed to use the vehicle. Herein, optionally, the management center may feed back rent duration information of the user who is going to use the vehicle to the user who is allowed to use the vehicle and who proposes a vehicle use requirement, so that the user who is allowed to use the vehicle can learn about real-time rent information of the vehicle.

Therefore, according to the vehicle management method in this embodiment of the present invention, the management center schedules the vehicle according to the mode identifier information of the vehicle, so as to effectively manage vehicle resources.

Optionally, in an embodiment, the scheduling the vehicle according to the mode identifier information includes:
when the mode identifier information indicates that the vehicle is in the self-use mode, obtaining the use time plan of the user who is going to use the vehicle, where the user who is going to use the vehicle represents another self-use user different from the user who is allowed to use the vehicle, and the user who is allowed to use the vehicle represents a self-use user who is allowed to use the vehicle.

Optionally, when the vehicle is in the self-use mode, the obtaining the use time plan of the user who is going to use the vehicle includes:
receiving a fourth vehicle use request message of a self-use user, where the fourth vehicle use request message includes identity information of the self-use user and a use time plan of the self-use user, and the self-use user is the user who is going to use the vehicle.

When the vehicle is in the self-use mode, the management device sends a first vehicle use notification message to the vehicle, where the first vehicle use notification message includes the identity information of the user who is going to use the vehicle and the use time plan of the user who is going to use the vehicle.

Specifically, if the mode identifier information indicates that the vehicle is in the self-use mode, the management center determines that the vehicle is allowed to be scheduled only to a single user. The management center obtains the fourth vehicle use request message of the self-use user, where the fourth vehicle use request message includes the identity information of the self-use user and the use time plan of the self-use user; determines to schedule, according to the use time plan of the self-use user, the vehicle to the self-use user; and sends the first vehicle use notification message to the vehicle. The first vehicle use notification message includes the identity information of the user who is going to use the vehicle and the use time plan of the user who is going to use the vehicle, and the user who is going to use the vehicle is the self-use user.

Optionally, when the vehicle is in the self-use mode, the method further includes:
sending a fourth vehicle use notification message to the vehicle, where the fourth vehicle use notification message includes identity information of a new user and a use time plan of the new user, and the new user is a user different from the self-use user; and
receiving a reject message sent by the vehicle, where the reject message is used to indicate that the vehicle rejects to perform an operation according to the fourth vehicle use notification message.

Optionally, the method further includes:
receiving a request message of another user, where the another user represents another user different from the self-use user;
when it is determined that a requirement of the another user does not match a vehicle in a rent mode, and it is determined that the requirement of the another user matches the vehicle, sending a fifth vehicle use notification message to the vehicle, where the fifth vehicle use notification message includes identity information of the another user and a use time plan of the another user; and
after a response message of the vehicle is received, determining to schedule the vehicle to the another user.

Specifically, when the vehicle is in the self-use mode, the management center may also receive a request message of another user, for example, a request message of the another user. The another user is another user different from the self-use user. If the management center does not find, in vehicles in a rent mode, a vehicle matching a requirement of the another user (a vehicle matching the another user is absent or non-idle), the management center may search, in vehicles in a self-use mode, for a vehicle matching the requirement of the another user. When determining that the requirement of the another user matches the vehicle, the management center sends the fifth vehicle use notification message to the vehicle. The fifth vehicle use notification message includes identity information of the another user and a use time plan (for example, rent duration information) of the another user. If the vehicle allows to be rented, the vehicle sends a response message to the management center. After receiving the response message of the vehicle, the management center schedules the vehicle to the another user. The identity information of the another user is used by the vehicle for verifying permission of the user who is allowed to use the vehicle, and the rent duration information of the another user is used by the vehicle for setting a use time of the another user.

Therefore, according to the vehicle management method in this embodiment of the present invention, the management center schedules the vehicle according to the mode identifier information of the vehicle, so as to effectively manage vehicle resources.

Optionally, in an actual data implementation process, for example, that the management center may determine, according to the mode identifier information, a vehicle resource set corresponding to the vehicle includes:
when the mode identifier information indicates that the vehicle is in the self-use mode, determining that the vehicle resource set corresponding to the vehicle is a self-use vehicle resource set.

Optionally, that the management center schedules the vehicle according to the vehicle resource set corresponding to the vehicle includes:
scheduling the vehicle according to a driving plan that is of a user who is allowed to use the vehicle and that is for the vehicle, where the user who is allowed to use the vehicle is a current user of the vehicle.

Specifically, when the mode identifier information indicates that the vehicle is in the self-use mode, the management center incorporates the vehicle into the self-use vehicle resource set, and then schedules the vehicle according to a driving plan of a current user of the vehicle. After the management center receives self-use mode identifier information of the vehicle, in a validity period of the self-use mode of the vehicle, the management center performs scheduling only according to the driving plan of the current user of the vehicle. For example, the user who is allowed to use the vehicle is the current user of the vehicle. That is, in the ITS, the management center schedules the vehicle for the driving plan of the current user in an overall planning manner in an entire process. Certainly, the management center may send a notification message to the vehicle. The notification message carries the driving plan and identity information of the current user. In an actual big ITS environment, an owner or a vehicle ownership possessor may not use a vehicle of the owner or the vehicle ownership possessor, and the vehicle may be scheduled to another user. Therefore, to use the vehicle, the owner or the vehicle ownership possessor further needs to apply to the management center for identity verification.

Therefore, according to the vehicle management method in this embodiment of the present invention, the management center schedules the vehicle according to the mode identifier information of the vehicle, so as to effectively manage vehicle resources.

Optionally, in an embodiment, S210 further includes:
generating the mode identifier information according to vehicle use information in the Intelligent Transportation System ITS.

Optionally, the management center sets the mode identifier information on the vehicle.

In this embodiment of the present invention, mode identifier information set by a management center and mode identifier information set by a user have equal effects. The management center sends the mode identifier information to a vehicle or directly sets the mode identifier information on the vehicle. The management center schedules the vehicle according to the mode identifier information of the vehicle, so as to effectively manage vehicle resources.

In this embodiment of the present invention, an effect of vehicle use information may be understood as: When vehicle scheduling is required in an area in the ITS, with reference to vehicle use information of all vehicles that are managed by the management device and that are in the ITS, the management device may determine whether to schedule a vehicle to provide a service for the area or may determine whether to schedule a vehicle out of the area. For example, the vehicle use information may be a factor such as a distance between a vehicle and an accident area.

For example, the management center may adjust mode identifier information of a vehicle in the ITS in real time according to a scheduling requirement of the ITS, and sends the mode identifier information to the vehicle, or the management center directly sets the mode identifier information on the vehicle. Specifically, for example, if an emergency occurs in an area in the ITS, and vehicles need to be scheduled to evacuate crowds in the area to a safe place, the management center makes selection from all the vehicles managed by the management center, and sets mode identifier information for selected vehicles. For example, a factor such as a distance between a vehicle and an accident area may be considered. A vehicle that is relatively near to the accident area is set to the rent mode, without a need of considering whether a current mode of the vehicle is the self-use mode or the rent mode. Specifically, the management center notifies a selected vehicle that forcible scheduling is enabled, and sets mode identifier information of the vehicle to rent mode information. For example, a related parameter of the rent mode information is attached, a value indicates that a mode of the vehicle is a rent mode, and a validity period of the rent mode is attached.

Optionally, when changing the mode identifier information of the vehicle, the management center may store a mode before the rent mode is forcibly enabled for the vehicle, and a validity period, so that the management center restores the vehicle to an original self-use mode or an original rent mode after duration of the forcible rent mode ends.

Optionally, the management center may send information related to a to-be-served user to the vehicle, for example, identity authentication information and a use time plan. The vehicle waits at a specified time and/or place according to the information related to the to-be-served user. After verifying the identity information of the to-be-served user, the vehicle leaves for a specified destination according to a driving plan of the to-be-served user. Optionally, the management center may notify the vehicle that the vehicle is possessed by the to-be-served user. In this case, the vehicle does not perform identity authentication on the to-be-served user, and directly picks up the to-be-served user according to a requirement of the management center (for example, a specified time and/or place).

Optionally, the management center may restore the vehicle to a mode before a use mode of the vehicle is forcibly changed. For example, after processing of the emergency in the area is completed, the management center notifies the vehicle that the rent mode forcibly set by the management center can be canceled, and a notification message is attached. The notification message carries a mode identifier parameter (including a mode value and validity duration) of a previous use mode of the vehicle. The vehicle is restored, according to the notification message, to the mode before the use mode is forcibly changed.

Therefore, according to the vehicle management method in this embodiment of the present invention, a management center obtains mode identifier information of a vehicle, and schedules the vehicle according to the mode identifier information of the vehicle, so as to effectively manage vehicle resources.

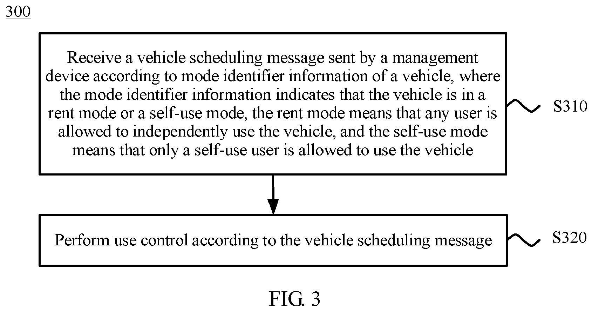

The foregoing describes, from a perspective of a management center, a vehicle management method according to an embodiment of the present invention, and the following describes, from a vehicle side, a vehicle management method according to an embodiment of the present invention with reference to FIG. 3.

FIG. 3 shows a schematic flowchart of a vehicle management method 300 according to an embodiment of the present invention. The method is executed by a vehicle. Specifically, the method may be executed by an in-vehicle device on a vehicle or another proper device that is on the vehicle and that can communicate with a management center of an ITS. This is not limited. The method 300 includes the following steps.

S310. Receive a vehicle scheduling message sent by a management device according to mode identifier information of a vehicle, where the mode identifier information indicates that the vehicle is in a rent mode or a self-use mode, the rent mode means that any user is allowed to independently use the vehicle, and the self-use mode means that only a self-use user is allowed to use the vehicle.

S320. Perform use control according to the vehicle scheduling message.

According to the vehicle management method in this embodiment of the present invention, the vehicle receives the vehicle scheduling message sent by the management device according to the mode identifier information, and performs use control according to the vehicle scheduling message, so that the management device can effectively manage vehicle resources.

For example, the performing use control according to the vehicle scheduling message includes:
executing, by the vehicle in a time period indicated in a use time plan of the user, a control command that is for the vehicle and that is entered by the user. The executing a control command that is for the vehicle and that is entered by the user includes: travelling according to the use time plan of the user.

Optionally, the method further includes:
obtaining the mode identifier information of the vehicle, and using the rent mode or the self-use mode according to the mode identifier information.

Specifically, the vehicle obtains the mode identifier information of the vehicle, where the mode identifier information indicates that the vehicle is in the rent mode or the self-use mode, the rent mode indicates that the vehicle may be independently used by any user. The self-use mode means that only a self-use user is allowed to use the vehicle, and in this case, the user of the vehicle is a self-use user. Optionally, the vehicle may provide the mode identifier information to the management device, so that the management device generates a vehicle use notification message according to the mode identifier information, and the vehicle can perform corresponding execution actions according to different mode identifier information.

Optionally, the obtaining the mode identifier information of the vehicle includes:
receiving the mode identifier information set by a user, where the user includes an owner of the vehicle or a user who has a management permission for the vehicle.

Specifically, the vehicle may receive the mode identifier information set by the user, and then sends the mode identifier information to the management center, so that the management center determines, according to the mode identifier information, a vehicle resource set corresponding to the vehicle.

Herein, the user is a general designation of users who can set a vehicle use mode, and has no other assumed ambiguity. Certainly, the user is not restricted to an owner. The user may include the owner of the vehicle or a user who has permission for the vehicle, specifically, such as the owner (who has highest permission for the vehicle, and may be set at vehicle delivery), a permission possessor specified by the owner (the owner may set multiple users who have permission for the vehicle, and the permission is inferior only to that of the owner).

Specifically, for example, when a user plans to perform some activities or transactions by using a vehicle, when travelling through a road at a specific time, the user may set mode identifier information of the vehicle to the self-use mode, and also set a validity period of the mode. After receiving the mode identifier information set by a management user, the vehicle sends the mode identifier information to the management center (a control center, a scheduling center, or a management center) of the ITS. A parameter value of the mode identifier information indicates that the vehicle is currently in the self-use mode, and a corresponding validity period is also carried. After receiving the mode identifier information, the management center incorporates the vehicle into a self-use vehicle resource set for management, and scheduling is performed only according to a driving plan of a current user during the period.

For another example, if a user does not use the vehicle temporarily, the user may set the mode identifier information of the vehicle to the rent mode, and also set a validity period of the mode identifier information. After receiving the mode identifier information set by a management user, the vehicle sends the mode identifier information to the management center (a control center, a scheduling center, or a management center) of the ITS. A parameter value of the mode identifier information indicates that the vehicle is currently in the rent mode, and a corresponding validity period is also carried. After receiving the mode identifier information, the management center incorporates the vehicle into a rent vehicle resource set for management, and the vehicle may be scheduled to another user who has a requirement during the period. Certainly, the self-use mode may be switched to after the validity period of the rent mode ends.

Therefore, according to the vehicle management method in this embodiment of the present invention, the management center schedules the vehicle according to the mode identifier information of the vehicle, so as to effectively manage vehicle resources.

Optionally, the obtaining the mode identifier information of the vehicle includes:
receiving new mode identifier information from the management device; and
updating the current mode identifier information by using the new mode identifier message.

That is, the mode identifier information of the vehicle may be mode identifier information generated or set by the management center according to vehicle use information in the ITS or a transportation service scheduling requirement. A method for generating the mode identifier information by the management center according to the vehicle use information in the ITS or the transportation service scheduling requirement is described above, and details are not described herein. After receiving the mode identifier information set by the management center, the vehicle changes the current mode identifier information of the vehicle according to the new mode identifier information. For example, when the management center requires the vehicle to be set to the rent mode, the vehicle changes the original self-use mode to the rent mode. In addition, after a validity period of a changed mode ends, the vehicle may receive a notification message from the management center, so as to restore to the original mode.

Optionally, the method further includes:
sending the mode identifier information to the management device.

Optionally, before the providing the mode identifier information of the vehicle to the management device, the method further includes:
receiving a query message sent by the management device, where the query message is used by the management center to obtain the mode identifier information.

Optionally, the receiving a vehicle scheduling message sent by a management device according to mode identifier information of a vehicle includes:
receiving a first vehicle use notification message sent by the management device, where the first vehicle use notification message includes identity information of a user who is going to use the vehicle and a use time plan of the user who is going to use the vehicle, and a use time plan of a user who is allowed to use the vehicle is not in conflict with the use time plan of the user who is going to use the vehicle.

When the mode identifier information indicates that the vehicle is in the rent mode, the user who is going to use the vehicle represents any other user different from the user who is allowed to use the vehicle, and the user who is allowed to use the vehicle represents any user who is allowed to use the vehicle; or when the mode identifier information indicates that the vehicle is in the self-use mode, the user who is going to use the vehicle represents another self-use user different from the user who is allowed to use the vehicle, and the user who is allowed to use the vehicle represents a self-use user who is allowed to use the vehicle.

The vehicle receives the first vehicle use notification message sent by the management device, where the first vehicle use notification message includes the identity information of the user who is going to use the vehicle and the use time plan of the user who is going to use the vehicle, and the use time plan of the user who is going to use the vehicle is not in conflict with the use time plan of the user who is going to use the vehicle. Herein, when the vehicle is in the rent mode, the user who is going to use the vehicle represents any other user different from the user who is allowed to use the vehicle, and the user who is allowed to use the vehicle represents any user who is allowed to use the vehicle; or when the vehicle is in the self-use mode, the user who is going to use the vehicle represents another self-use user different from the user who is allowed to use the vehicle, and the user who is allowed to use the vehicle represents a self-use user who is allowed to use the vehicle.

Optionally, before the receiving a first vehicle use notification message sent by the management device, the method further includes:
receiving a second vehicle use notification message sent by the management device, where the second vehicle use notification message includes identity information of the user who is allowed to use the vehicle and an updated use time plan of the user who is allowed to use the vehicle.

Therefore, the vehicle may pre-receive the second vehicle use notification message, where the second vehicle use notification message includes the identity information of the user who is allowed to use the vehicle and the use time plan of the user who is allowed to use the vehicle, and the use time plan of the user who is allowed to use the vehicle is not in conflict with the use time plan of the user who is going to use the vehicle, so that the vehicle can further learn related information of the user who is allowed to use the vehicle. Related information of the user who is going to use the vehicle has been obtained by using the first vehicle use notification message.

Specifically, before receiving the first vehicle use notification message, the vehicle may further receive the second vehicle use notification message sent by the management device. The second vehicle use notification message includes the identity information of the user who is allowed to use the vehicle and the use time plan of the user who is allowed to use the vehicle, and the use time plan of the user who is allowed to use the vehicle is not in conflict with the use time plan of the user who is going to use the vehicle. After confirming the identity information of the user who is allowed to use the vehicle, the vehicle allows the user who is allowed to use the vehicle to use the vehicle. The user who is allowed to use the vehicle represents a user who is allowed to use the vehicle. Certainly, the user who is allowed to use the vehicle also needs to provide identity authentication information of the user who is allowed to use the vehicle. Only after the vehicle confirms an identity or permission of the user who is allowed to use the vehicle, the user who is allowed to use the vehicle can use the vehicle. In other words, when the vehicle is in the rent mode or the self-use mode, the vehicle receives the first vehicle use notification message, and executes, in a time period indicated in the use time plan of the user who is going to use the vehicle, a control command that is for the vehicle and that is entered by the user who is going to use the vehicle. Before receiving the first vehicle use notification message, the vehicle may further first receive the related information of the user who is allowed to use the vehicle.

For example, when a vehicle can be rented, if another user sends a vehicle use requirement message to the management center, the management center makes selection from vehicles in a rent vehicle resource set. If a vehicle matching the requirement of the another user is found in the rent vehicle resource set, the management center determines to schedule the vehicle to the another user, and sends a notification message to the vehicle. The notification message includes identity authentication information and rent duration information of the user. After receiving the notification message, the vehicle first confirms the identity information of the user. After use permission confirmation is completed, the another user rents the vehicle to complete a related transaction.

Optionally, after the receiving a first vehicle use notification message sent by the management device, the method further includes:
receiving a third vehicle use notification message sent by the management device, where the third vehicle use notification message includes the identity information of the user who is allowed to use the vehicle and the updated use time plan of the user who is allowed to use the vehicle, and the updated use time plan of the user who is allowed to use the vehicle is not in conflict with the use time plan of the user who is going to use the vehicle, or the updated use time plan of the user who is allowed to use the vehicle is in conflict with the use time plan of the user who is going to use the vehicle, but the vehicle is not used by the user who is going to use the vehicle.

Optionally, when it is determined that the updated use time plan of the user who is allowed to use the vehicle is in conflict with the use time plan of the user who is going to use the vehicle, an alarm response message is sent to the management device. The alarm response message is used to indicate that the updated use time plan of the user who is allowed to use the vehicle is in conflict with the use time plan of the user who is going to use the vehicle.

Specifically, when the vehicle is in the rent mode, after receiving the first vehicle use notification message sent by the management device, the vehicle may further receive the third vehicle use notification message sent by the management device. The third vehicle use notification message includes the identity information of the user who is allowed to use the vehicle and the updated use time plan of the user who is allowed to use the vehicle. When determining that the updated use time plan of the user who is allowed to use the vehicle is in conflict with the use time plan of the user who is going to use the vehicle, the vehicle sends an alarm response message to the management device. The alarm response message is used to indicate that the updated use time plan of the user who is allowed to use the vehicle is in conflict with the use time plan of the user who is going to use the vehicle.

In addition, if determining that the updated use time plan of the user who is allowed to use the vehicle is not in conflict with the use time plan of the user who is going to use the vehicle, the vehicle may provide a transportation service to the user who is allowed to use the vehicle. For example, after verifying the identity information of the user who is allowed to use the vehicle, the vehicle travels according to the updated use time plan of the user who is allowed to use the vehicle.

Optionally, the method further includes:
receiving a mode switch message from the management center, where the mode switch message is used by the management center to instruct the vehicle to change a mode of the vehicle; and
after rent duration of the user who is going to use the vehicle ends, switching the mode of the vehicle to the self-use mode according to the mode switch message, so that the management center schedules the vehicle to the user who is allowed to use the vehicle.

Specifically, in a period during which the vehicle is rented to the user who is going to use the vehicle, the vehicle may receive the mode switch message from the management center. The mode switch message is used by the management center to instruct the vehicle to change the mode. After the rent duration of the user who is going to use the vehicle ends, the vehicle switches the rent mode of the vehicle to the self-use mode, so that the management center schedules the vehicle to the user who is allowed to use the vehicle. The user who is allowed to use the vehicle may be an owner of the vehicle or a user who has a management permission for the vehicle.

Therefore, according to the vehicle management method in this embodiment of the present invention, the management center schedules the vehicle according to the mode identifier information of the vehicle, so as to effectively manage vehicle resources.

Optionally, when the mode identifier information of the vehicle indicates that the vehicle is in the self-use mode, the user is a self-use user, and only the self-use user is allowed to use the vehicle. The mode identifier information is obtained by the vehicle, and after the receiving a first vehicle use notification message sent by the management device, the method further includes:
receiving a fourth vehicle use notification message sent by the management device, where the fourth vehicle use notification message includes identity information of a new user and a use time plan of the new user, and the new user is a user different from the self-use user; and
sending a reject message to the management device, where the reject message is used to indicate that the vehicle rejects to perform an operation according to the fourth vehicle use notification message.

Specifically, when the vehicle is in the self-use mode, the self-use mode means that the vehicle can be used by only one user. In this case, a user who is going to use the vehicle is a self-use user. Correspondingly, the first vehicle use notification message includes identity information of the self-use user and a use time plan of the self-use user. After the vehicle receives the fourth vehicle use notification message sent by the management device, the fourth vehicle use notification message includes the identity information of the new user and the use time plan of the new user, and the new user is a user different from the self-use user. In this case, because the vehicle has been used by a self-use user after the vehicle receives the first vehicle use notification message, the vehicle sends a reject message to the management device. The reject message is used to indicate that the vehicle rejects to perform an operation according to the fourth vehicle use notification message. In other words, in the self-use mode, only one user is allowed to use the vehicle, and the vehicle may reject to receive the fourth vehicle use notification message.

Optionally, when the mode identifier information of the vehicle indicates that the vehicle is in the self-use mode, the method further includes:
receiving a fifth vehicle use notification message sent by the management device, where the fifth vehicle use notification message includes identity information of another user and a use time plan of the another user, a requirement of the another user matches the vehicle, and the another user represents another user different from the self-use user; and
when it is determined to allow the another user to use the vehicle, sending a response message to the management center.

Specifically, when the vehicle is in the self-use mode of a self-use user, if another user (for example, the another user) sends a vehicle use request message to the management center, when the management center does not find, in vehicles in a rent mode, a vehicle matching the another user, the management center may make selection from vehicles in a self-use mode. When determining that the requirement of the another user matches the vehicle in the self-use mode, the management center sends a fifth vehicle use notification message to the vehicle. The fifth vehicle use notification message includes identity information of the another user and a use time plan of the another user. After receiving the fifth vehicle use notification message, the vehicle decides whether to allow the another user to use the vehicle. For example, the vehicle may notify the owner of the vehicle or the user who has permission for the vehicle, and the vehicle allows or rejects a vehicle use plan of the owner of the vehicle or the user who has permission for the vehicle. When determining to allow the another user to use the vehicle, the vehicle sends a response message to the management center. After the vehicle allows to be rented, the vehicle may set a use mode to the rent mode, and set a validity period of the rent mode according to rent duration information of a self-use user. Certainly, the vehicle may restore to the self-use mode after the validity period of the rent mode ends.

Therefore, according to the vehicle management method in this embodiment of the present invention, the management center schedules the vehicle according to the mode identifier information of the vehicle, so as to effectively manage vehicle resources.

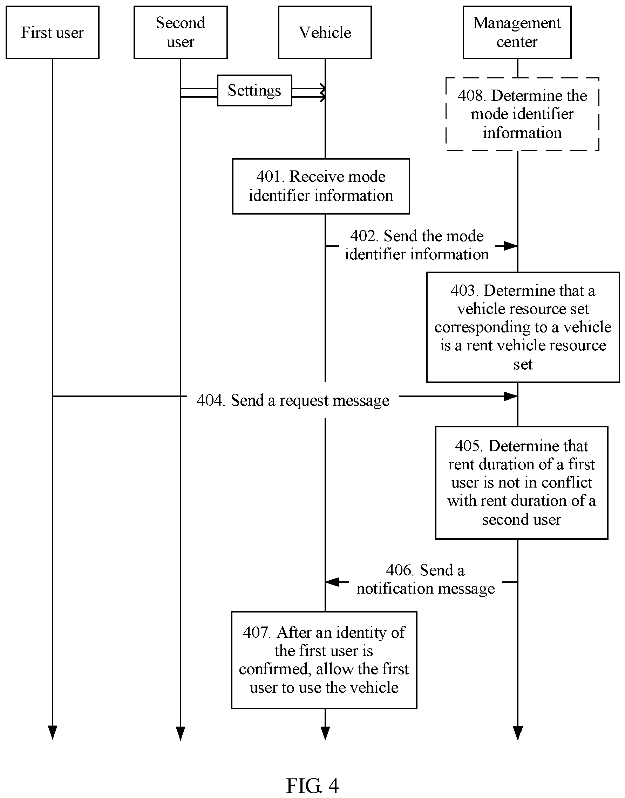

The following describes a vehicle management method according to an embodiment of the present invention with reference to FIG. 4. FIG. 4 shows a schematic diagram of an interaction example of the method according to an embodiment of the present invention. It should be noted that this is merely intended to help a person skilled in the art better understand this embodiment of the present invention, but is not intended to limit the scope of this embodiment of the present invention. As shown in FIG. 4, a management center may be the management center 15 in FIG. 1, a vehicle may be one of the vehicles 16 in FIG. 1, a first user is another user different from a second user, the second user is a user currently allowed to use the vehicle, and the method includes the following steps.

S401. The vehicle receives mode identifier information set by the second user, where the mode identifier information indicates whether the vehicle is in a rent mode.

The vehicle receives the mode identifier information set by the second user. Herein, that a vehicle mode set by the second user is the rent mode is used as an example for description.

S402. The vehicle sends the mode identifier information to the management center.

After the vehicle sends the mode identifier information to the management center, the management center receives the mode identifier information sent by the vehicle.

S403. The management center determines that a vehicle resource set corresponding to the vehicle is a rent vehicle resource set.

Herein, the management center incorporates the vehicle to the rent vehicle resource set. Certainly, if the mode identifier information identifies that the vehicle is in the self-use mode, the management center adds the vehicle to a self-use vehicle resource set. Herein, the rent vehicle resource set corresponding to the rent mode is used as an example for description.

S404. The management center receives a request message sent by the first user.

The first user is another user different from the second user. The first user sends a vehicle use request message to the management center, and attaches identity authentication information and rent duration information of the first user.

S405. The management center determines that rent duration of the first user is not in conflict with rent duration of the second user.

Herein, the management center determines that the rent duration of the first user is not in conflict with the rent duration of the second user, and determines to schedule the vehicle to the first user.

S406. The management center sends a notification message to the vehicle.

The management center sends the notification message to the vehicle, and the notification message carries the identity authentication information and the rent duration information of the first user.

S407. After confirming an identity of the first user, the vehicle allows the first user to use the vehicle.

After receiving the notification message from the management center, the vehicle needs to confirm the identity of the first user. After the identity or permission of the first user is confirmed, the first user is allowed to rent the vehicle.

Optionally, S408: The management center may also determine the mode identifier information.

Herein, that the mode identifier information is set to the rent mode is used as an example for description. When the mode identifier information is set to the self-use mode (not shown in the figure), processing may be performed with reference to the method for the self-use mode described above, and details are not described herein.

It should be understood that only the first user and the second user are used as examples for description herein. In actual application, there are more users who rent vehicle resources, and this is also applicable to the method in this embodiment of the present invention, so that a user's requirement on a vehicle service is met as required. Therefore, the management center determines, according to the mode identifier information of the vehicle, a vehicle resource set corresponding to the vehicle, and schedules the vehicle according to the vehicle resource set corresponding to the vehicle, so that the first user and the second user can rent and use the vehicle, so as to implement flexible vehicle allocation.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

The foregoing describes in detail the vehicle management method according to an embodiment of the present invention, and the following describes a vehicle management apparatus according to an embodiment of the present invention.

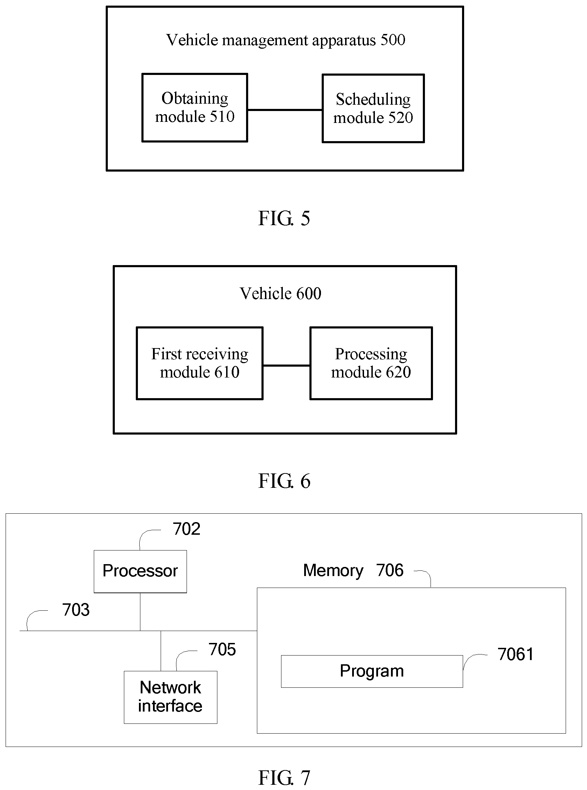

FIG. 5 shows a schematic block diagram of a vehicle management apparatus 500 according to an embodiment of the present invention. The apparatus may be a management center, a control center, another device that has a function of centrally controlling an ITS system, or the like in the ITS system. As shown in FIG. 5, the apparatus 500 includes:
an obtaining module 510, configured to obtain mode identifier information of a vehicle, where the mode identifier information indicates that the vehicle is in a rent mode or a self-use mode, the rent mode means that any user is allowed to independently use the vehicle, and the self-use mode means that only a self-use user is allowed to use the vehicle; and
a scheduling module 520, configured to schedule the vehicle according to the mode identifier information obtained by the obtaining module 510.

According to the vehicle management apparatus in this embodiment of the present invention, a management center schedules a vehicle according to mode identifier information of the vehicle, so as to effectively manage vehicle resources.

In this embodiment of the present invention, the obtaining mode identifier information may comprises receiving the mode identifier information from the vehicle, or setting the mode identifier information for the vehicle.

Optionally, in an embodiment, the obtaining module 510 is specifically configured to:
receive the mode identifier information from the vehicle.

Optionally, the apparatus further includes:
a query module, configured to send a query message to the vehicle, where the query message is used to obtain the mode identifier information.

Optionally, in an embodiment, the obtaining module 510 is specifically configured to:
generate the mode identifier information according to vehicle use information in the Intelligent Transportation System ITS.

Optionally, the apparatus further includes:
a sending module, configured to send the mode identifier information to the vehicle, so that the vehicle uses the rent mode or the self-use mode.

Optionally, the scheduling module 520 is specifically configured to:
obtain a use time plan of a user who is going to use the vehicle; and
when a use time plan of a user who is allowed to use the vehicle is not in conflict with the use time plan of the user who is going to use the vehicle, send a first vehicle use notification message to the vehicle, where the first vehicle use notification message includes identity information of the user who is going to use the vehicle and the use time plan of the user who is going to use the vehicle, where
when the mode identifier information indicates that the vehicle is in the rent mode, the user who is going to use the vehicle represents any other user different from the user who is allowed to use the vehicle, and the user who is allowed to use the vehicle represents any user who is allowed to use the vehicle; or when the mode identifier information indicates that the vehicle is in the self-use mode, the user who is going to use the vehicle represents another self-use user different from the user who is allowed to use the vehicle, and the user who is allowed to use the vehicle represents a self-use user who is allowed to use the vehicle.

Optionally, the scheduling module 520 is further specifically configured to:
receive a first vehicle use request message of the user who is going to use the vehicle, where the first vehicle use request message includes the identity information of the user who is going to use the vehicle and the use time plan of the user who is going to use the vehicle.

Optionally, the scheduling module 520 is further specifically configured to:
obtain the use time plan of the user who is allowed to use the vehicle; and
send a second vehicle use notification message to the vehicle, where the second vehicle use notification message includes identity information of the user who is allowed to use the vehicle and the use time plan of the user who is allowed to use the vehicle.

Optionally, the scheduling module 520 is further specifically configured to:
receive a second vehicle use request message of the user who is allowed to use the vehicle, where the second vehicle use request message includes the identity information of the user who is allowed to use the vehicle and the use time plan of the user who is allowed to use the vehicle.

Optionally, the scheduling module 520 is further specifically configured to:
obtain an updated use time plan of the user who is allowed to use the vehicle; and
when the updated use time plan of the user who is allowed to use the vehicle is not in conflict with the use time plan of the user who is going to use the vehicle, send a third vehicle use notification message to the vehicle, where the third vehicle use notification message includes the identity information of the user who is allowed to use the vehicle and the updated use time plan of the user who is allowed to use the vehicle; or
when the updated use time plan of the user who is allowed to use the vehicle is in conflict with the use time plan of the user who is going to use the vehicle, and the vehicle is used by the user who is going to use the vehicle, schedule a new vehicle for the user who is allowed to use the vehicle; or
when it is determined that the updated use time plan of the user who is allowed to use the vehicle is in conflict with the use time plan of the user who is going to use the vehicle, and that the vehicle is not used by the user who is going to use the vehicle, schedule a new vehicle for the user who is going to use the vehicle.

The vehicle management apparatus 500 according to this embodiment of the present invention may execute the vehicle management method 200 according to the embodiment of the present invention. In addition, the foregoing and other operations and/or functions of the modules in the apparatus 500 are separately used to implement corresponding procedures of the foregoing methods. For brevity, details are not described herein.

Therefore, according to the vehicle management apparatus in this embodiment of the present invention, a management center schedules a vehicle according to mode identifier information of the vehicle, so as to effectively manage vehicle resources.

The foregoing describes the vehicle management apparatus according to an embodiment of the present invention from a management center side with reference to FIG. 5, and the following gives description from a vehicle side with reference to FIG. 6.

FIG. 6 shows a schematic block diagram of a vehicle 600 according to an embodiment of the present invention. As shown in FIG. 6, the vehicle 600 includes:
a first receiving module 610, configured to receive a vehicle scheduling message sent by a management device according to mode identifier information of the vehicle, where the mode identifier information indicates that the vehicle is in a rent mode or a self-use mode, the rent mode means that any user is allowed to independently use the vehicle, and the self-use mode means that only a self-use user is allowed to use the vehicle; and
a processing module 620, configured to perform use control according to the vehicle scheduling message received by the first receiving module.

In this embodiment of the present invention, the vehicle receives the vehicle scheduling message sent by the management device according to the mode identifier information, and performs use control according to the vehicle scheduling message, so that the management device can effectively manage vehicle resources.

Optionally, in an embodiment, the vehicle further includes:
an obtaining module, configured to obtain the mode identifier information of the vehicle, and use the rent mode or the self-use mode according to the mode identifier information.

Optionally, the vehicle further includes:
a provision module, configured to send the mode identifier information obtained by the obtaining module to the management device, so that the management device generates a vehicle use notification message according to the mode identifier information.

Optionally, in an embodiment, the obtaining module is configured to:
receive the mode identifier information set by a user, where the user includes an owner of the vehicle or a user who has a management permission for the vehicle.

Optionally, in an embodiment, the first receiving module 610 is specifically configured to:
receive a first vehicle use notification message sent by the management device, where the first vehicle use notification message includes identity information of a user who is going to use the vehicle and a use time plan of the user who is going to use the vehicle, and a use time plan of a user who is allowed to use the vehicle is not in conflict with the use time plan of the user who is going to use the vehicle, where
when the mode identifier information indicates that the vehicle is in the rent mode, the user who is going to use the vehicle represents any other user different from the user who is allowed to use the vehicle, and the user who is allowed to use the vehicle represents any user who is allowed to use the vehicle; or when the mode identifier information indicates that the vehicle is in the self-use mode, the user who is going to use the vehicle represents another self-use user different from the user who is allowed to use the vehicle, and the user who is allowed to use the vehicle represents a self-use user who is allowed to use the vehicle.

Optionally, in an embodiment, the first receiving module 610 is further configured to:
receive a second vehicle use notification message sent by the management device, where the second vehicle use notification message includes identity information of the user who is allowed to use the vehicle and an updated use time plan of the user who is allowed to use the vehicle.

Optionally, in an embodiment, the first receiving module 610 is further configured to:
receive a third vehicle use notification message sent by the management device, where the third vehicle use notification message includes the identity information of the user who is allowed to use the vehicle and the updated use time plan of the user who is allowed to use the vehicle, and the updated use time plan of the user who is allowed to use the vehicle is not in conflict with the use time plan of the user who is going to use the vehicle, or the updated use time plan of the user who is allowed to use the vehicle is in conflict with the use time plan of the user who is going to use the vehicle, but the vehicle is not used by the user who is going to use the vehicle.

Optionally, the vehicle further includes:
a sending module, configured to send the mode identifier information to the management device.

Optionally, the vehicle further includes:
a second receiving module, configured to receive a query message sent by the management device, where the query message is used by the management device to obtain the mode identifier information.

Therefore, according to the vehicle in this embodiment of the present invention, the vehicle receives the vehicle scheduling message sent by the management device according to the mode identifier information, and performs use control according to the vehicle scheduling message, so that the management device can effectively manage vehicle resources.

The vehicle 600 according to this embodiment of the present invention may execute the vehicle management method 300 according to the embodiment of the present invention. In addition, the foregoing and other operations and/or functions of the modules in the in-vehicle device 600 are separately used to implement corresponding procedures of the foregoing methods. For brevity, details are not described herein.

FIG. 7 shows a structure of a vehicle management apparatus according to another embodiment of the present invention. The vehicle management apparatus includes at least one processor 702 (for example, a CPU), at least one network interface 705 or another communications interface, a memory 706, and at least one communications bus 703 configured to implement connection and communication between these apparatuses. The processor 702 is configured to execute an executable module, for example, a computer program, stored in the memory 706. The memory 706 may include a high-speed random access memory (RAM: Random Access Memory), or may further include a non-volatile memory (non-volatile memory), such as at least one magnetic disk memory. Communication and connection between the vehicle management apparatus and at least one other network element is implemented by using the at least one network interface 705 (which may be wired or wireless).

In some implementations, the memory 706 stores a program 7061, and the processor 702 executes the program 7061, so as to execute the vehicle management method on a management center side in the foregoing embodiment of the present invention.

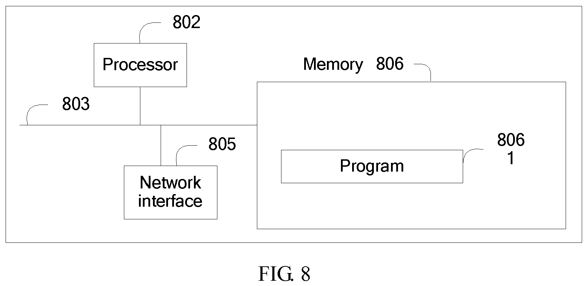

FIG. 8 shows a structure of a vehicle apparatus according to another embodiment of the present invention. The vehicle apparatus includes at least one processor 802 (for example, a CPU), at least one network interface 805 or another communications interface, a memory 806, and at least one communications bus 803 configured to implement connection and communication between these apparatuses. The processor 802 is configured to execute an executable module, for example, a computer program, stored in the memory 806. The memory 806 may include a high-speed random access memory (RAM: Random Access Memory), or may further include a non-volatile memory (non-volatile memory), such as at least one magnetic disk memory. Communication and connection between the vehicle and at least one other network element is implemented by using the at least one network interface 805 (which may be wired or wireless).

In some implementations, the memory 806 stores a program 8061, and the processor 802 executes the program 8061, so as to execute the vehicle management method on a vehicle side in the foregoing embodiment of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A vehicle management method, comprising:
obtaining mode identifier information of a vehicle, wherein the mode identifier information indicates that the vehicle is in a rent mode or a self-use mode, the rent mode means that any user is allowed to independently use the vehicle, and the self-use mode means that only a self-use user is allowed to use the vehicle; and
scheduling the vehicle according to the mode identifier information.

2. The method according to claim 1, wherein after the obtaining mode identifier information of a vehicle, the method further comprises:
sending the mode identifier information to the vehicle, so that the vehicle uses the rent mode or the self-use mode.

3. The method according to claim 1 or 2, wherein the scheduling the vehicle according to the mode identifier information comprises:
obtaining a use time plan of a user who is going to use the vehicle; and
when a use time plan of a user who is allowed to use the vehicle is not in conflict with the use time plan of the user who is going to use the vehicle, sending a first vehicle use notification message to the vehicle, wherein the first vehicle use notification message comprises identity information of the user who is going to use the vehicle and the use time plan of the user who is going to use the vehicle, wherein
when the mode identifier information indicates that the vehicle is in the rent mode, the user who is going to use the vehicle represents any other user different from the user who is allowed to use the vehicle, and the user who is allowed to use the vehicle represents any user who is allowed to use the vehicle; or when the mode identifier information indicates that the vehicle is in the self-use mode, the user who is going to use the vehicle represents another self-use user different from the user who is allowed to use the vehicle, and the user who is allowed to use the vehicle represents a self-use user who is allowed to use the vehicle.

4. The method according to claim 3, wherein before the obtaining a use time plan of a user who is going to use the vehicle, the method further comprises:
obtaining the use time plan of the user who is allowed to use the vehicle; and
sending a second vehicle use notification message to the vehicle, wherein the second vehicle use notification message comprises identity information of the user who is allowed to use the vehicle and the use time plan of the user who is allowed to use the vehicle.

5. The method according to claim 3 or 4, wherein after the sending a first vehicle use notification message to the vehicle, the method further comprises:
obtaining an updated use time plan of the user who is allowed to use the vehicle; and
when the updated use time plan of the user who is allowed to use the vehicle is not in conflict with the use time plan of the user who is going to use the vehicle, sending a third vehicle use notification message to the vehicle, wherein the third vehicle use notification message comprises the identity information of the user who is allowed to use the vehicle and the updated use time plan of the user who is allowed to use the vehicle; or
when the updated use time plan of the user who is allowed to use the vehicle is in conflict with the use time plan of the user who is going to use the vehicle, and the vehicle is used by the user who is going to use the vehicle, scheduling a new vehicle for the user who is allowed to use the vehicle; or
when it is determined that the updated use time plan of the user who is allowed to use the vehicle is in conflict with the use time plan of the user who is going to use the vehicle, and that the vehicle is not used by the user who is going to use the vehicle, scheduling a new vehicle for the user who is going to use the vehicle.

6. The method according to any one of claims 1 to 5, wherein the obtaining mode identifier information of a vehicle comprises:
receiving the mode identifier information from the vehicle.

7. The method according to claim 6, wherein before the receiving the mode identifier information from the vehicle, the method further comprises:
sending a query message to the vehicle, wherein the query message is used to obtain the mode identifier information.

8. A vehicle management method, comprising:
receiving a vehicle scheduling message sent by a management device according to mode identifier information of a vehicle, wherein the mode identifier information indicates that the vehicle is in a rent mode or a self-use mode, the rent mode means that any user is allowed to independently use the vehicle, and the self-use mode means that only a self-use user is allowed to use the vehicle; and
performing use control according to the vehicle scheduling message.

9. The method according to claim 8, wherein the method further comprises:
obtaining the mode identifier information of the vehicle, and using the rent mode or the self-use mode according to the mode identifier information.

10. The method according to claim 8 or 9, wherein the receiving a vehicle scheduling message sent by a management device according to mode identifier information of a vehicle comprises:
receiving a first vehicle use notification message sent by the management device, wherein the first vehicle use notification message comprises identity information of a user who is going to use the vehicle and a use time plan of the user who is going to use the vehicle, and a use time plan of a user who is allowed to use the vehicle is not in conflict with the use time plan of the user who is going to use the vehicle, wherein
when the mode identifier information indicates that the vehicle is in the rent mode, the user who is going to use the vehicle represents any other user different from the user who is allowed to use the vehicle, and the user who is allowed to use the vehicle represents any user who is allowed to use the vehicle; or when the mode identifier information indicates that the vehicle is in the self-use mode, the user who is going to use the vehicle represents another self-use user different from the user who is allowed to use the vehicle, and the user who is allowed to use the vehicle represents a self-use user who is allowed to use the vehicle.

11. The method according to claim 10, wherein before the receiving a first vehicle use notification message sent by the management device, the method further comprises:
receiving a second vehicle use notification message sent by the management device, wherein the second vehicle use notification message comprises identity information of the user who is allowed to use the vehicle and an updated use time plan of the user who is allowed to use the vehicle.

12. The method according to claim 10 or 11, wherein after the receiving a first vehicle use notification message sent by the management device, the method further comprises:
receiving a third vehicle use notification message sent by the management device, wherein the third vehicle use notification message comprises the identity information of the user who is allowed to use the vehicle and the updated use time plan of the user who is allowed to use the vehicle, and the updated use time plan of the user who is allowed to use the vehicle is not in conflict with the use time plan of the user who is going to use the vehicle, or the updated use time plan of the user who is allowed to use the vehicle is in conflict with the use time plan of the user who is going to use the vehicle, but the vehicle is not used by the user who is going to use the vehicle.

13. The method according to any one of claims 8 to 12, wherein the method further comprises:
sending the mode identifier information to the management device.

14. The method according to claim 13, wherein before the sending the mode identifier information to the management device, the method further comprises:
receiving a query message sent by the management device, wherein the query message is used by the management device to obtain the mode identifier information.

15. A vehicle management apparatus, comprising:
an obtaining module, configured to obtain mode identifier information of a vehicle, wherein the mode identifier information indicates that the vehicle is in a rent mode or a self-use mode, the rent mode means that any user is allowed to independently use the vehicle, and the self-use mode means that only a self-use user is allowed to use the vehicle; and
a scheduling module, configured to schedule the vehicle according to the mode identifier information obtained by the obtaining module.

16. The apparatus according to claim 15, wherein the apparatus further comprises:
a sending module, configured to send the mode identifier information to the vehicle, so that the vehicle uses the rent mode or the self-use mode.

17. The apparatus according to claim 15 or 16, wherein the scheduling module is specifically configured to:
obtain a use time plan of a user who is going to use the vehicle; and
when a use time plan of a user who is allowed to use the vehicle is not in conflict with the use time plan of the user who is going to use the vehicle, send a first vehicle use notification message to the vehicle, wherein the first vehicle use notification message comprises identity information of the user who is going to use the vehicle and the use time plan of the user who is going to use the vehicle, wherein
when the mode identifier information indicates that the vehicle is in the rent mode, the user who is going to use the vehicle represents any other user different from the user who is allowed to use the vehicle, and the user who is allowed to use the vehicle represents any user who is allowed to use the vehicle; or when the mode identifier information indicates that the vehicle is in the self-use mode, the user who is going to use the vehicle represents another self-use user different from the user who is allowed to use the vehicle, and the user who is allowed to use the vehicle represents a self-use user who is allowed to use the vehicle.

18. The apparatus according to claim 17, wherein the scheduling module is further specifically configured to:
obtain the use time plan of the user who is allowed to use the vehicle; and
send a second vehicle use notification message to the vehicle, wherein the second vehicle use notification message comprises identity information of the user who is allowed to use the vehicle and the use time plan of the user who is allowed to use the vehicle.

19. The apparatus according to claim 17 or 18, wherein the scheduling module is further specifically configured to:
obtain an updated use time plan of the user who is allowed to use the vehicle; and
when the updated use time plan of the user who is allowed to use the vehicle is not in conflict with the use time plan of the user who is going to use the vehicle, send a third vehicle use notification message to the vehicle, wherein the third vehicle use notification message comprises the identity information of the user who is allowed to use the vehicle and the updated use time plan of the user who is allowed to use the vehicle; or
when the updated use time plan of the user who is allowed to use the vehicle is in conflict with the use time plan of the user who is going to use the vehicle, and the vehicle is used by the user who is going to use the vehicle, schedule a new vehicle for the user who is allowed to use the vehicle; or
when it is determined that the updated use time plan of the user who is allowed to use the vehicle is in conflict with the use time plan of the user who is going to use the vehicle, and that the vehicle is not used by the user who is going to use the vehicle, schedule a new vehicle for the user who is going to use the vehicle.

20. The apparatus according to any one of claims 15 to 19, wherein the obtaining module is specifically configured to:
receive the mode identifier information from the vehicle.

21. The apparatus according to claim 20, wherein the apparatus further comprises:
a query module, configured to send a query message to the vehicle, wherein the query message is used to obtain the mode identifier information.

22. A vehicle, comprising:
a first receiving module, configured to receive a vehicle scheduling message sent by a management device according to mode identifier information of the vehicle, wherein the mode identifier information indicates that the vehicle is in a rent mode or a self-use mode, the rent mode means that any user is allowed to independently use the vehicle, and the self-use mode means that only a self-use user is allowed to use the vehicle; and
a processing module, configured to perform use control according to the vehicle scheduling message received by the first receiving module.

23. The vehicle according to claim 22, wherein the vehicle further comprises:
an obtaining module, configured to obtain the mode identifier information of the vehicle, and use the rent mode or the self-use mode according to the mode identifier information.

24. The vehicle according to claim 22 or 23, wherein the first receiving module is specifically configured to:
receive a first vehicle use notification message sent by the management device, wherein the first vehicle use notification message comprises identity information of a user who is going to use the vehicle and a use time plan of the user who is going to use the vehicle, and a use time plan of a user who is allowed to use the vehicle is not in conflict with the use time plan of the user who is going to use the vehicle, wherein
when the mode identifier information indicates that the vehicle is in the rent mode, the user who is going to use the vehicle represents any other user different from the user who is allowed to use the vehicle, and the user who is allowed to use the vehicle represents any user who is allowed to use the vehicle; or when the mode identifier information indicates that the vehicle is in the self-use mode, the user who is going to use the vehicle represents another self-use user different from the user who is allowed to use the vehicle, and the user who is allowed to use the vehicle represents a self-use user who is allowed to use the vehicle.

25. The vehicle according to claim 24, wherein the first receiving module is further configured to:
receive a second vehicle use notification message sent by the management device, wherein the second vehicle use notification message comprises identity information of the user who is allowed to use the vehicle and an updated use time plan of the user who is allowed to use the vehicle.

26. The vehicle according to claim 24 or 25, wherein the first receiving module is further configured to:
receive a third vehicle use notification message sent by the management device, wherein the third vehicle use notification message comprises the identity information of the user who is allowed to use the vehicle and the updated use time plan of the user who is allowed to use the vehicle, and the updated use time plan of the user who is allowed to use the vehicle is not in conflict with the use time plan of the user who is going to use the vehicle, or the updated use time plan of the user who is allowed to use the vehicle is in conflict with the use time plan of the user who is going to use the vehicle, but the vehicle is not used by the user who is going to use the vehicle.

27. The vehicle according to any one of claims 22 to 26, wherein the vehicle further comprises:
a sending module, configured to send the mode identifier information to the management device.

28. The vehicle according to claim 27, wherein the vehicle further comprises:
a second receiving module, configured to receive a query message sent by the management device, wherein the query message is used by the management device to obtain the mode identifier information.
